Europäisches Patentamt

European Patent Office

Office européen des brevets

(19)

(11) Veröffentlichungsnummer : **0 113 891**
**B1**

(12)

# EUROPÄISCHE PATENTSCHRIFT

(45) Veröffentlichungstag der Patentschrift :
04.03.87

(21) Anmeldenummer : 83112651.1

(22) Anmeldetag : 15.12.83

(51) Int. Cl.⁴ : **H 02 B 1/04**

(54) **Einrichtung zur Befestigung eines elektrischen Bauteils.**

(30) Priorität : 12.01.83 DE 3300797

(43) Veröffentlichungstag der Anmeldung :
25.07.84 Patentblatt 84/30

(45) Bekanntmachung des Hinweises auf die Patenterteilung : 04.03.87 Patentblatt 87/10

(84) Benannte Vertragsstaaten :
AT CH DE FR GB IT LI NL SE

(56) Entgegenhaltungen :
CH-A- 460 115
DE-A- 2 245 362
FR-A- 2 065 340
FR-A- 2 118 911
FR-A- 2 340 607
GB-A- 1 176 390

(73) Patentinhaber : E.G.O. Elektro-Geräte Blanc u. Fischer
Rote-Tor-Strasse Postfach 11 80
D-7519 Oberderdingen (DE)

(72) Erfinder : Essig, Willi
Tribergstrasse 3
D-7030 Boeblingen (DE)
Erfinder : Stricker, Wilhelm
Schulstrasse 41
D-7524 Oestringen-Odenheim (DE)

(74) Vertreter : Patentanwälte Ruff und Beier
Neckarstrasse 50
D-7000 Stuttgart 1 (DE)

**Beschreibung**

Die Erfindung betrifft eine Einrichtung zur Befestigung eines elektrischen Bauteils nach dem Oberbegriff des Anspruchs 1.

Aus der DE-A-22 45 362 ist ein elektrisches Gerät mit seitlichen Gehäusenuten bekanntgeworden, das mittels Halterungsvorsprüngen an einem Geräteteil oder Gestell befestigt werden kann. Die Halterungsvorsprünge sind Laschen, die in die hinterschnitten ausgebildeten Nuten angewinkelt hineingesteckt werden, und zwar etwa senkrecht zur Nutlängsrichtung. Durch Verkippen legen sie sich in den Nuten fest und werden dann durch Schrauben am Geräteteil befestigt. Diese Befestigung ist sehr aufwendig in der Montage und benötigt viele Teile und Schraubvorgänge.

An der Frontseite von Kochherden oder ähnlichen Geräten, beispielsweise Wasch- oder Geschirrspülmaschinen, sind üblicherweise elektrische Schalter so angeordnet, daß ihre Einstellwellen, auf die Einstellknöpfe gesteckt werden, durch die Blende nach vorn hindurchragen. Die Befestigung erfolgt üblicherweise durch Schrauben, die die Steuereinrichtung an der Blende festlegen.

Aus der DE-C-26 04 783 ist ein Siebentakt-Schalter bekanntgeworden, dessen bedienungsseitige Stirnfläche von einem Blechschild überdeckt ist, dessen Seitenränder um einen Vorsprung des Schalterkörpers herumgebogen sind, so daß der nunmehr nach innen gekippte Außenrand des Blechschildes in seitliche Nuten des Schalterkörpers eingreift. Die Längssicherung erfolgt durch umgekippte Blechlaschen am oberen und unteren Ende jedes Randes. An dem Blechschild sind im Bereich von vorspringenden Ausprägungen Gewindelöcher vorgesehen, durch die Befestigungsschrauben reichen, mit denen der Schalter von der Blende her festgeschraubt werden kann. Ein Schlitz in dem Blechschild greift in eine Nut an der Einstellwelle des Schalters ein und sichert diese in Längsrichtung (d. h. gegen Abziehen).

Aufgabe der Erfindung ist es, eine Befestigungseinrichtung für eine derartige Steuereinrichtung zu schaffen, bei der die Teileanzahl verringert und die Montage erleichtert ist.

Diese Aufgabe wird gemäß der Erfindung durch das Kennzeichen des Anspruchs 1 gelöst.

Die Befestigung kann nun, statt bisher durch Schrauben, durch einfaches Einstecken erfolgen. Die Steuereinrichtung wird dazu im wesentlichen parallel zur Blendenebene, und zwar vorzugsweise vertikal von oben nach unten, eingesteckt, wobei die Halterungsvorsprünge, die vorzugsweise als hinter der Blendenebene liegende Winkel ausgebildet sind, in die am Schalterkörper vorhandene Nut eingreifen und diesen parallel zur Blendenfläche führen. Ein unterer Anschlag begrenzt die vertikale Einsteckbewegung, und Rastfedern fallen am oberen Ende des Schalters ein, so daß er nunmehr fest positioniert ist.

Das bisherige Blechschild kann also bei dieser Ausführung eingespart werden, und die Halterungsvorsprünge, der Positionieranschlag und die Rastfedern können aus dem Material der Blende geformt sein und vorteilhaft an einen Ausschnitt der Blende angrenzen. Es wird also statt der sonst üblichen Durchtrittsöffnung für die Einstellwelle und die Befestigungsbohrung lediglich ein anderer Ausschnitt mit einigen Abbiegungen geprägt und dadurch der Blechschild und Befestigungsschrauben, eingespart. Außerdem ist die Montage durch das Einschieben wesentlich vereinfacht und erleichtert.

In der Blende kann ein parallel zu der Führung verlaufender Einführschlitz für eine an der Steuereinrichtung vorgesehene, durch die Blendenebene ragende Einstellwelle vorgesehen sein. In diesem Fall kann die Steuereinrichtung in ihrer fertigen Ausführung eingeführt werden. Es wäre jedoch auch möglich, die Steuereinrichtung ohne Einstellwelle zu befestigen und diese dann von vorne her durch die Blende in den Schalter einzuführen. Die Einstellwelle der Steuereinrichtung kann durch Einklebung in ein auf die Einstellwelle gestecktes Schaltnockenteil befestigt sein.

Vorzugsweise sind zwei Rastfedern vorgesehen, die mit Abstand voneinander im wesentlichen parallel angeordnet sind. Durch diese Ausführung wird die Steuereinrichtung weitgehend kippfrei festgelegt. Die Rastfedern können vorzugsweise abgeschrägte Rastflächen aufweisen, die auf die Steuereinrichtung zur Aufrechterhaltung eines Kontaktdruckes einwirken. Die Rasteinrichtung wirkt in diesem Falle nicht nur als eine widerhakenartige Einrastung zur Sicherung der Steuereinrichtung in ihrer Position, sondern es wird zusätzlich dafür gesorgt, daß diese Festlegung auch federnd und daher klapperfrei ist.

Es ist besonders vorteilhaft, daß für die erfindungsgemäße Befestigungseinrichtung ein Schalterkörper verwendet werden kann, wie er auch für die bisherige Ausführung mit Blechschild nach DE-C-26 04 783 verwendet wurde. Die dort ohnehin vorgesehenen Schlitze bilden die Nuten für die Halterungsvorsprünge. Das bedeutet aber, daß der Körper der Steuereinrichtung in dem Fall, daß eine Schraubbefestigung erwünscht oder erforderlich ist, auch mit einem Blechschild versehen sein kann. Dies führt zu einer vorteilhaften Verringerung der Typenvielfalt und ermöglicht es, die Steuereinrichtung ohne Änderung ihres Körpers auch als Ersatz- und Austauschteil für ältere Geräte benutzen zu können. Bevorzugte Anwendung der Befestigungseinrichtung ist Befestigung von Schaltern oder Reglern an Herdblenden. Es können jedoch auch andere Steuereinrichtungen für ähnliche Geräte damit befestigt werden, beispielsweise Programmschalter an Waschmaschinen oder dgl.

Die Merkmale der Ansprüche und weitere, aus der folgenden Beschreibung im Zusammenhang mit den Zeichnungen erläuterte Merkmale können jeweils für sich allein oder zu mehreren in Form von Unterkombinationen bei einer Ausführungsform der Erfindung verwirklicht sein. Ausführungsbeispiele der Erfindung sind in der Zeichnung dargestellt und werden im folgenden näher erläutert. Es zeigen

Figur 1 eine Seitenansicht einer Befestigungseinrichtung für eine Steuereinrichtung in einer Herdblende (geschnitten nach Linie I in Fig. 2),

Figur 2 die Frontansicht einer Herdblende mit eingebauter Steuereinrichtung,

Figur 3 einen Schnitt nach der Linie III in Fig. 2,

Figur 4 einen Schnitt nach der Linie IV in Fig. 2,

Figur 5 ein Detail aus Fig. 4,

Figur 6 eine Darstellung ähnlich Fig. 4, jedoch von einer Ausführung mit Schraubbefestigung, und

Figur 7 eine perspektivische Detailansicht der Ausführung nach Fig. 6.

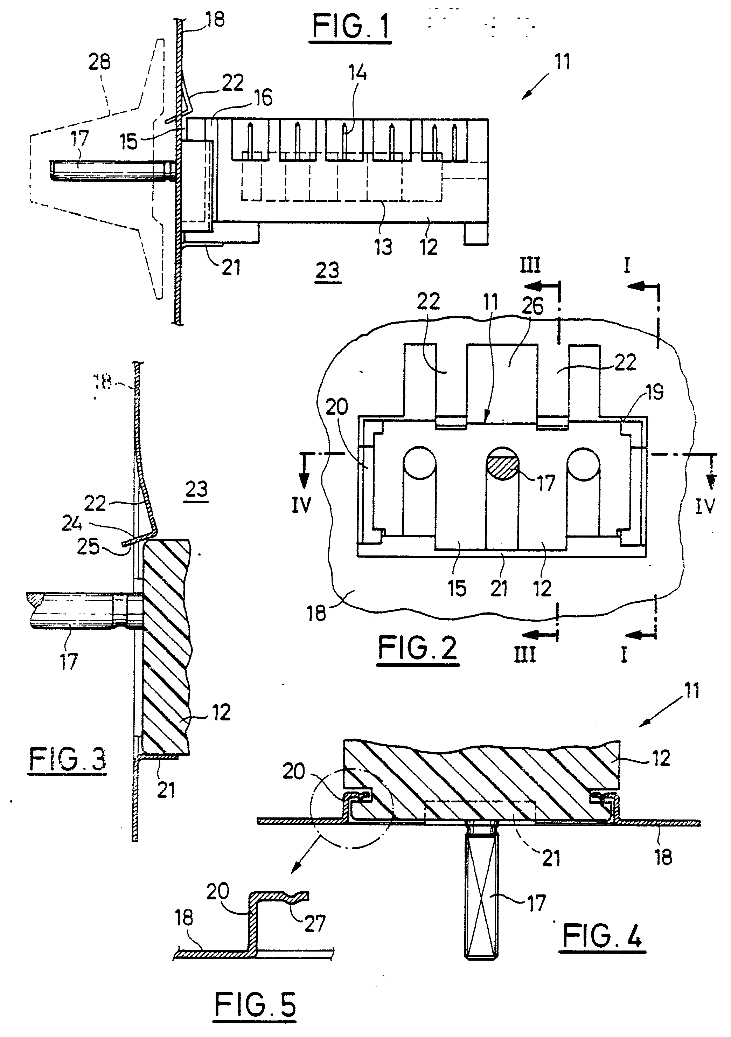

In Fig. 1 ist eine Steuereinrichtung 11 dargestellt, und zwar ein Siebentakt-Schalter für einen Elektroherd. Er wird im folgenden als Schalter 11 bezeichnet. Er besitzt einen Schalterkörper 12 aus Isoliermaterial, beispielsweise duroplastischem Kunststoff, und trägt im Inneren nicht dargestellte Schaltfedern, die von einem strichliert angedeuteten Schaltnockenteil 13 betätigt werden können. Die Anschlußleitungen können auf Falchsteckzungen 14 aufgesteckt werden. Der Schalter entspricht bezüglich seines Schalterkörpers und seiner Organe zum elektrischen Anschluß und zum Schalter dem nach der DE-C-26 04 783, auf die Bezug genommen wird.

Im Bereich seiner bedienungsseitigen Stirnfläche 15 hat der Schalterkörper 12 im Bereich seiner schmaleren Seitenkanten je eine senkrechte Nut 16, die über die gesamte Seitenhöhe des Schalterkörpers 12 läuft. Aus der Stirnfläche 15 ragt eine Einstellwelle 17 heraus, die in üblicher Weise als einseitig abgeflachte, im übrigen kreisrunde Welle ausgebildet ist und innerhalb des Schalters in das Schaltnockenteil 13 hineinragt und dieses dreht. Die Einstellwelle 17 kann in dem Schaltnockenteil 13 durch eine Klebung befestigt sein, so daß das Schaltnockenteil 13 die Welle gegen axiale Verschiebung festhält.

Der Schalter 11 ist in eine Wandung, z. B. eine Blende 18 des Elektroherdes eingebaut, die entweder aus dem Material der Herdwandung bestehen kann oder als gesondertes Teil in einen Elektroherd eingebaut ist. Sie besteht aus Blech. Im Bereich des Schalters 11 ist ein Ausschnitt 19 in der Blende 18 vorgesehen, der in etwa die Form der Stirnfläche 15 des Schalters 11 hat, etwas größer ist als diese und angrenzend an seinen Rand an beiden Seiten je einen Halterungsvorsprung 20 aufweist, der die Form von zum Herdinneren und dann aufs Innere des Ausschnitts zu abgebogenen Blechlappen aufweist (s. insbesondere Fig. 4 und 5).

Angrenzend an die Unterkante des Ausschnitts 19 ist ein Blechlappen rechtwinklig nach innen abgebogen und bildet einen Anschlag 21 (Fig. 1 und 3), der mit der Unterseite des Schalterkörpers 12 zu dessen Positionierung zusammenwirkt.

An der Oberkante des Ausschnittes sind drei über die Oberkante des Schalterkörpers nach oben ragende Einschnitte vorgesehen, die zwei Rastfedern 22 abgrenzen, die die insbesondere aus Fig. 3 zu erkennende Form haben, d. h. eine aufs Herdinnere 23 zu gerichtete flache Abschrägung, die etwa rechtwinklig in einen nach außen gerichteten Rastabschnitt 24 übergeht, dessen Unterseite eine Rastfläche 25 bildet.

Der mittlere der drei Einschnitte 26 ist wesentlich breiter als die Einstellwelle 17, und der Abstand seines oberen Randes von der Einstellwelle ist länger als der durch das Zusammenwirken zwischen der Nut 16 und den Halterungsvorsprüngen 20 bestimmte vertikale Einschiebeweg. Auf den nach Art von Winkelschienen ausgebildeten Halterungsvorsprüngen ist, wie aus Fig. 5 zu erkennen ist, eine Sicke 27 ausgeprägt, über die ein gewisser Kontaktdruck auf den Schalterkörper aufgebracht wird.

Aus den Figuren 1 bis 5 ist zu erkennen, daß die Befestigung des Schalters 11 an der Blende 18 einfach dadurch erfolgt, daß der Schalter von innen an die Blende im Bereich des Ausschnittes herangebracht wird, wobei die Einstellwelle 17 durch den Einschnitt 26 nach vorn ragt und die Halterungsvorsprünge 20 noch unterhalb der Nut 16 liegen. Dann wird der Schalter vertikal heruntergeführt, so daß die Halterungsvorsprünge 20 in die Nut 16 eingreifen und die Rastfeder 22 auf der Bedienungsseite 15 gleitet und dabei etwas federnd eingedrückt wird. Wenn die Unterseite des Schalterkörpers 12 am Anschlag 21 anliegt, schnappt die Rastfeder 22 wieder in ihre in den Figuren 1 und 3 dargestellte Position, wobei die Rastfläche, die mit der Einschieberichtung einen etwas von 90° abweichenden Winkel bildet, an der oberen Vorderkante des Schalterkörpers unter Druck anliegt und dadurch verhindert, daß die Rastfeder 22 ganz in ihre spannungsfreie Lage übergeht. Daher bleibt ein ständiger Kontaktdruck zwischen Blende 18 und Schalterkörper 12 vorhanden, der verhindert, daß die Befestigung lose wird. Nach dem Einrasten des Schalters kann dann der strichliert angedeutete Einstellknopf 28 auf die Einstellwelle 17 aufgeschoben werden und die mechanische Montage des Schalters ist beendet.

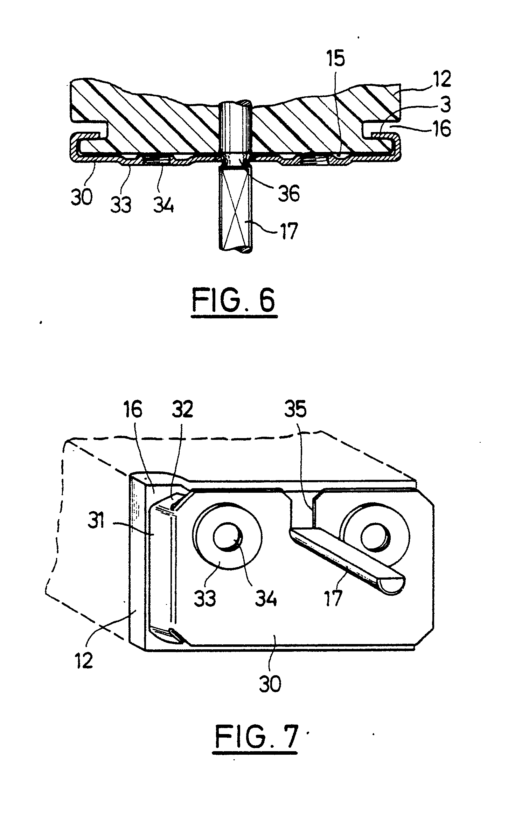

In den Figuren 6 und 7 ist dargestellt, daß mit dem identisch gleichen Schalterkörper 12 auch eine Schraubbefestigung möglich ist. Dazu wird an dem Schalterkörper 12 ein Blechschild 30 angebracht, das die bedienungsseitige Stirnfläche 15 gänzlich überdeckt. Dieses im wesentlichen flache Blechschild wird an seinen beiden Seiten U-förmig umgebogen, so daß es mit seinem umgebogenen Rand 31 in die Nuten 16 des Schalterkörpers eingreift. Oben und unten vorstehende Blechlappen 32 werden nach innen gebogen, so daß sie den Blechschild am Schalterkörper sichern. An der Bedienungsseite hat der Blechschild 30 zwei etwas erhaben ausgeprägte kreisförmige Vorsprünge 33, in deren Mitte Bohrungen 34 mit Gewinde vorgesehen sind, in die durch die Blende hindurch Schrauben eingeschraubt werden können. Ein einseitig bis zum Rand reichender Schlitz 35 in dem Blechschild greift in eine Ringnut 36 an der Einstellwelle ein, so daß die Einstellwelle dadurch axial gesichert ist und in diesem Falle nicht eingeklebt zu werden braucht. Statt der Einklebung wären aber auch andere axiale Befestigungen für die Einstellwelle möglich, beispielsweise Rastvorrichtungen.

**Patentansprüche**

1. Einrichtung zur Befestigung eines elektrischen Bauteils an einer Wandung, insbesondere eines Schalters, Reglers oder dgl. an einer Herdblende (18), mit Nuten (16) an dem Körper (12) des Bauteils (11), die parallel zur Wandung verlaufen und in die Halterungsvorsprünge (20) einführbar sind, die zusammenwirken und das Bauteil (11) an der Wandung festlegen, dadurch gekennzeichnet, daß die zur Wandung gehörenden Halterungsvorsprünge (20) sich in einer zur Wandung parallelen Ebene erstrecken, derart, daß das Bauteil (11) mit seinen Nuten (16) parallel zur Ebene der Wandung in die daran vorgesehenen Halterungsvorsprünge einführbar ist und daß an der Wandung wenigstens ein Positionieranschlag (21) und wenigstens eine Rastfeder (22) zur Lagefixierung des Bauteils (11) vorgesehen ist.

2. Befestigungseinrichtung nach Anspruch 1, dadurch gekennzeichnet, daß die Halterungsvorsprünge (20), der Positionieranschlag (21) und die wenigstens eine Rastfeder (22) aus dem Material der Blende (18) geformt sind und vorteilhaft an einen Ausschnitt (19) der Blende (18) angrenzen.

3. Befestigungseinrichtung nach Anspruch 1 oder 2, dadurch gekennzeichnet, daß in der Blende (18) ein parallel zu der Führung verlaufender Einführschlitz (26) für eine an der Steuereinrichtung (11) vorgesehene, durch die Blendenebene ragende Einstellwelle (17) vorgesehen ist.

4. Befestigungseinrichtung nach einem der vorhergehenden Ansprüche, dadurch gekennzeichnet, daß eine Einstellwelle (17) der Steuereinrichtung (11) durch Einklebung in ein auf die Einstellwelle gestecktes Schaltnockenteil (13) befestigt ist.

5. Befestigungseinrichtung nach einem der vorhergehenden Ansprüche, dadurch gekennzeichnet, daß zwei Rastfedern (22) vorgesehen sind, die mit Abstand voneinander im wesentlichen parallel angeordnet sind.

6. Befestigungseinrichtung nach einem der vorhergehenden Ansprüche, dadurch gekennzeichnet, daß die wenigstens eine Rastfeder eine vorzugsweise abgeschrägte Rastfläche (25) aufweist, die auf die Steuereinrichtung (11) zur Aufrechterhaltung eines Kontaktdruckes einwirkt.

7. Befestigungseinrichtung nach einem der vorhergehenden Ansprüche, dadurch gekennzeichnet, daß die Halterungsvorsprünge (20) in seitliche Nuten (16) am Körper (12) der Steuereinrichtung (11) eingreifende, von der Blende (18) aus ins Geräteinnere (23) versetzte Winkelschienen sind.

8. Befestigungseinrichtung nach einem der vorhergehenden Ansprüche, dadurch gekennzeichnet, daß die Nuten (16) am Körper (12) der Steuereinrichtung (11) zum wahlweisen Eingriff mit den Halterungsvorsprüngen (20) der Blende (18) oder mit Randabbiegungen (31) eines die Stirnseite (15) des Körpers (12) überdeckenden Blechschildes (30) mit Einrichtungen (34) zur Schraub- oder Steckbefestigung und vorzugsweise mit einem Sicherungsschlitz (35) zur Sicherung der Einstellwelle (17) ausgebildet sind.

**Claims**

1. Device for fixing an electrical component to a wall, particularly a switch, regulator or the like to a cooker shield (18), with recesses (16) on the body (12) of component (11), which run parallel to the wall and can be introduced into the fastening projections (20), which cooperate and secure the component (11) to the wall, characterized in that the fastening projections (20) belonging to the wall extend in a plane parallel thereto, in such a way that the component (11) with its recesses (16) is introducable parallel to the plane of the wall into the fastening projections provided thereon and that on the wall is provided at least one positioning shoulder (21) and at least one stop spring (22) for fixing the position of component (11).

2. Fixing device according to claim 1, characterized in that the fastening projections (20), the positioning shoulder (21) and the at least one stop spring (22) are shaped from the material of shield (18) and advantageously are adjacent to a cutout (19) of shield (18).

3. Fixing device according to claims 1 or 2, characterized in that parallel to the guide an insertion slot (26) is provided on shield (18) for an adjusting shaft (17) located on control device (11) and projecting through the shield plane.

4. Fixing device according to one of the preceding claims, characterized in that an adjusting shaft (17) of control device (11) can be fixed by bonding in a trip cam (13) mounted on the adjusting shaft.

5. Fixing device according to one of the preceding claims, characterized in that two stop springs (22) are provided, which are spaced and substantially parallel.

6. Fixing device according to one of the preceding claims, characterized in that the at least one stop spring has a preferably bevelled stop surface (25), which acts on the control device (11) for maintaining a contact pressure.

7. Fixing device according to one of the preceding claims, characterized in that the fastening projections (20) are angle rails engaging in lateral recesses (16) on body (12) of control device (11) and displaced towards the apparatus interior (23) from shield (18).

8. Fixing device according to one of the preceding claims, characterized in that the recesses (16) on body (12) of control device (11) are constructed for random engagement with the fastening projections (20) of shield (18) or with edge deflections (31) of a metal plate (30) covering the end face (15) of body (12) with devices (34) for screw or plug-in fixing purposes and preferably with a securing slot (35) for securing the adjusting shaft (17).

**Revendications**

1. Dispositif de fixation d'un appareil électrique sur une paroi, notamment d'un commutateur, d'un organe de réglage ou similaire sur un écran de cuisinière (18), comportant des encoches (16) sur le corps (12) de l'appareil (11) qui s'étendent parallèlement à la paroi et peuvent être emboîtées sur des saillies de retenue (20), lesquelles coopèrent et assujettissent l'appareil (11) à la paroi, caractérisé en ce que les saillies de retenue (20) faisant partie de la paroi s'étendent dans un plan parallèle à la paroi de manière que l'appareil (11) puisse être emboîté avec ses encoches (16) parallèlement au plan de la paroi dans les saillies de retenue qui y sont prévues et en ce que sur la paroi sont prévus au moins une butée de positionnement (21) et au moins un ressort à encliquetage (22) pour la fixation en position de l'appareil (11).

2. Dispositif de fixation selon la revendication 1, caractérisé en ce que les saillies de retenue (20), la butée de positionnement (21) et au moins le ressort à encliquetage (22) sont formés dans le matériau de l'écran (18) et sont avantageusement attenant à une découpe (19) de l'écran (18).

3. Dispositif de fixation selon la revendication 1 ou 2, caractérisé en ce que dans l'écran (18) est prévue une fente d'introduction (26), s'étendant parallèlement au guidage pour un axe de réglage (17) qui est prévu sur le dispositif de commande (11) et qui fait saillie à travers le plan de l'écran.

4. Dispositif de fixation selon l'une quelconque des revendications précédentes, caractérisé en ce qu'un axe de réglage (17) du dispositif de commande (11) est fixé par collage dans un élément de came de contacteur (13) enfiché sur l'axe de réglage.

5. Dispositif de fixation selon l'une quelconque des revendications précédentes, caractérisé en ce que sont prévus deux ressorts à encliquetage (22) qui sont disposés sensiblement parallèlement à une certaine distance l'un de l'autre.

6. Dispositif de fixation selon l'une quelconque des revendications précédentes, caractérisé en ce qu'au moins le ressort à encliquetage présente une surface d'arrêt (25) de préférence inclinée qui agit sur le dispositif de commande (11) pour maintenir une pression de contact.

7. Dispositif de fixation selon l'une quelconque des revendications précédentes, caractérisé en ce que les saillies de retenue (20) sont des cornières qui s'engagent dans des encoches latérales (16) du corps (12) du dispositif de commande (11) et qui sont décalées vers l'intérieur (23) de l'appareil à partir de l'écran (18).

8. Dispositif de fixation selon l'une quelconque des revendications précédentes, caractérisé en ce que les encoches (16) du corps (12) du dispositif de commande (11) sont conçues pour l'engagement sélectif avec les saillies de retenue (20) de l'écran (18) ou avec des bords repliés (31) d'un écran de tôle (30) recouvrant la face frontale (15) du corps (12) avec des dispositifs (34) pour la fixation par vissage ou par enfichage et de préférence avec une fente de blocage (35) pour le blocage en position de l'axe de réglage (17).

FIG.1

FIG.2

FIG.3

FIG.4

FIG.5

FIG. 6

FIG. 7